# EUROPÄISCHE PATENTSCHRIFT

(11) **EP 1 078 853 B1**
(45) Veröffentlichungstag und Bekanntmachung des Hinweises auf die Patenterteilung: **18.02.2004**
(21) Anmeldenummer: 00117686.6
(22) Anmeldetag: 17.08.2000
(51) Int. Cl.: B64D 13/00, B64D 13/08

(54) **Anordnung zur Klimatisierung von Unterflurbereichen eines Passagierflugzeuges**
Air conditioning system for passenger aircraft cargo space
Système de climatisation pour la soute à fret d'un aèronef de passagers

(30) Priorität: 25.08.1999 DE 19940165
(43) Veröffentlichungstag der Anmeldung: 28.02.2001
(73) Patentinhaber: Airbus Deutschland GmbH, 21129 Hamburg (DE)
(72) Erfinder: Scheffler, Hans-Joachim, 20251 Hamburg (DE); Markwart, Michael, 25469 Halstenbek (DE); Buchholz, Uwe, 21640 Bliedersdorf (DE)
(74) Vertreter: Hansmann, Dierk, Dipl.-Ing.

(56) Entgegenhaltungen:
- US-A- 4 445 342
- US-A- 5 516 330

## Beschreibung

Die Erfindung bezieht sich auf eine Anordnung zur Klimatisierung von Unterflurbereichen eines Passagierflugzeuges. Ihre Anwendung liegt im Bereich der verbesserten (effizienten) Klimatisierung von Frachträumen und / oder anderweitig verwendeten Unterflurbereichen, die von einer rationellen Ausnutzung vorhandener Wärmeenergie-Ressorcen des Passagierflugzeuges begleitet wird. Gleich-falls werden mit der Erfindung prophylaktische Maßnahmen des Brandschutzes umgesetzt.

Es sind verschiedene Lösungen bekannt, nach denen Maßnahmen der Klimatisierung von Rumpfbereichen (inclusive von Frachtraumbereichen) für bekannte Flugzeugtypen vorgeschlagen wird. Danach ist es bekannt, daß der Unterdeck-Bereich eines Passagierflugzeuges (ausgewählter Flugzeugtypen) auch mit Schlaf-Container(n) ausgestattet wird. Um diese Schlafbereiche für den einzelnen Passagier verträglich zu klimatisieren, wird die dorthin eingeblasene Luft mit einem elektrischen Heizer auf die vorgesehene Raumtemperatur aufgeheizt oder mit einer Kühleinrichtung abgekühlt. Die eingeblasene Luft setzt sich aus verschiedenen Luftkomponenten zusammen, wobei auch Teilmengen der wiederaufbereiten und (aus den Passagierbereichen stammenden) Abluft rezirkuliert werden, die man zusätzlich (während der Umsetzung von Maßnahmen der Wiederaufbereitung der rezirkulierten Luft) mit geeigneten Kühleinrichtungen (bspw. mit einem Flugzeughaut-Wärme-tauscher) auf eine bestimmte Temperatur abgekühlt. Dabei lassen sich während des Kühlprozesses nur Temperaturgefälle innerhalb einem eng begrenzten Temperatur-Rahmen umsetzen. Bei der Luft-Aufbereitung wird deshalb wenigstens ein Mehrbedarf an zusätzlich benötigter Elektroenergie zum Betreiben des Heizers zu disponieren sein, da der Energiebedarf zum Betreiben der Klimaaggregate ohnehin vorgesehen wird. Dabei wird der Energie-Mehrbedarf zu Lasten der (ohnehin knappen) Energieressorcen und der Betreiberkosten (des Flugzeuges) wirken.

Als Vorbild für die Umsetzung von Maßnahmen der Klimatisierung von (allgemein) Rumpfbereichen eines Flugzeuges wird die DE-C-43 35 152 genannt, weil sie auch Maßnahmen zur Klimatisierung von Unterflurbereichen (hier: des Elektrotechnik-/Elektronikbereiches und des Frachtbereiches) eines Passagierflugzeuges vorschlägt. Gleichermaßen bezieht sich das vorgestellte Umluftsystem auch auf die Klimatisierung des Passagier- und Cockpitbereiches, wobei der Unterflurbereich dem Umluftsystem mit angeschlossen ist.

Aus dieser Druckschrift wird der im Flugzeugbau kundige Fachmann entnehmen, daß eine Luftmischereinheit den Passagier- und Cockpitbereich eines Passagierflugzeuges mit aufbereiteter Mischluft versorgt. Dabei setzt sich die Mischluft aus Teilmengen der verbrauchten Abluft, die dem Passagier- und Cockpitbereich abgeführt und danach mittels einer sogenannten Kabinenrecyclingeinheit (bestehend aus: einer Partikel- und/oder Geruchsfiltereinheit, einer Lüftereinheit, einer Kohlendioxidadsorbereinheit und einer Wärmeaustauschereinheit) aufbereitet wird, und der extern abgezapften Frischluft, die von den Triebwerken des Flugzeuges als heiße Zapfluft bezogen wird, zusammen.

Diese Ab- und Frischluft werden der Mischereinheit zugeleitet und nach einem Mischvorgang (der verschiedenen Luftkomponenten) von der Mischereinheit dem (den) Passagier- und Cockpitbereich(en) als Mischluft eingeblasen werden. Erwähnt wird, daß die (dem Passagier- und Cockpitbereich) rückgeführte Abluft vor dem Verlassen der Recyclingeinheit mittels der (ihr integrierten) Wärmetauscher-einheit, der extern bezogene kühle Außenluft zugeführt wird, durch letztere mittels der kühlen Außenluft auf ein klimaverträgliches temperiertes Wärmeniveau abgekühlt wird, die dann als (sogenanntermaßen bezeichnete) aufbereitete Rezirkulationsluft der Mischereinheit zugeführt wird. Im weiteren wird vorgeschlagen, daß die Mischluft vor ihrem Eintritt in den Klimabereich (genauer: in den Passagier- und Cockpitbereich) mittels einer weiteren nachgeregelten (abge-zweigten) Teilmenge von (triebwerksentnommener) Zapfluft nachtemperiert wird, deren Einspeisung durch eine (sogenannte) Trimmluftsteuerventileinheit kontrolliert wird. Diese aus zwei Trimmluft-Regelventilen aufgebaute Einheit regelt die getrennte Zufuhr genannter Trimmluft-Teilmenge(n) (einmal) für den Passagierbereich und (zum anderen) für das Cockpit. Die unterdecks befindlichen Unterflurbereiche des Flugzeuges werden (nur indirekt) davon erfaßt, weil eine Belüftung des erwähnten Elektrotechnik-/Elektronikbereiches und des Frachtraumbereiches nur über den Cockpit-bereich durchdringende Leckage(n) vorgeschlagen wird. Dabei erreicht diese Frischluft den Elektro-technik-/Elektronikbereich und den Frachtraumbereich mit einer Durchdringung von Leckagen. Sie verläßt den Frachtraumbereich entweder über ein Auslaßventil oder über eine Rumpfleckage und dringt so aus dem Druckrumpf nach außen. Diese vorgestellte Lösung bezieht sich hauptsächlich auf den Ausgleich von Leckagen im Druckrumpf, wenngleich sie auch mit auf die Aufrechterhaltung der Luftqualität in der Flugzeugkabine durch Zufuhr von Frischluft (aber nicht primär) abzielt. Dabei wird die Frischluftzufuhr nur zum Ersatz der Rumpfleckagen benötigt. Entsprechende Maßnahmen zur verbesserten Klimatisierung der Unterflurbereiche unter der Maßgabe eines rationellen Umganges mit vorhandenen Energieressorcen werden nicht vorgeschlagen. Auch werden keine Maßnahmen des prophylaktischen Brandschutzes angedacht.

Es ist bereits nach der nicht vorveröffentlichten deutschen Patentanmeldung 199 27 606 bekannt, Anordnung zur Klimatisierung von Unterflurbereichen eines Passagierflugzeuges anzugeben, mit der die Unterflurbereiche (eines zonal unterteilten Unterdeckbereiches), die sich in der Hauptsache auf dort vorhandenen Frachtraum mit oder ohne eingerüstetem(n) Schlaf-Container(n) und auf einen angrenzenden Treppenhausbereich beziehen, rationell klimatisiert (angemessen be- und entlüftet) werden, wobei in jenen Bereichen entsprechende Maßnahmen des prophylaktischen Brandschutzes vorzusehen sind, um weitestgehend die flächenmäßige Ausdehnung eines Brandes zu verhindern, wenigstens jedoch die Entlüftung der mit Rauch und sonstigen gefährdenden Stoffen versetzten Abluft aus dem Frachtraum einschließlich dem (den) Schlaf-Container(n) zu vermeiden.

Diese Anordnung zur Klimatisierung von Unterflurbereichen eines Passagierflugzeuges wird mit erfolgversprechenden Maßnahmen eine verbesserte (effiziente) Klimatisierung von Frachträumen und / oder anderweitig verwendeten Unterflurbereichen, die von einer rationellen Ausnutzung vorhandener Wärmeenergie-Ressorcen des Passagierflugzeuges begleitet wird, umsetzen. Gleich-falls werden von ihr prophylaktische Maßnahmen des Brandschutzes beachtet. Verborgen bleiben der Fachwelt allerdings Maßnahmen, die sich auf die Ein- und Umrüstung von Schlafcontainern im Flugzeug, mit denen der sorgsame Umgang der vorhandener Energiequellen unter Weiterverfolgung der brandschutztechnischen Ziele vorgeschlagen wird, beziehen. Dabei werden derartige Situationen nicht selten - aus der Sicht des späteren Betreibers (der Airliner) bei Flügen mit Großraumflugzeugen zu erwarten sein. Aus Gründen der bedarfsgerechten Transportauslastung (Personen- und Güterverkehr gleichermaßen berücksichtigt) wird eine Flexiblität (auch) wegen der Auslastung der vorhandenen Unterdeckfläche(n) bei gleichermaßener Gewährleistung eines servicefreundlichen Passagierkomforts vonnöten sein. Wegen dem variablen Ein- oder Ausbau von Schlafcontainern, die man insbesondere bei Langstreckenflügen berücksichtigen wird, sind bei deren absehbarer Nicht-belegung oder bei Vorsehung der Unterflurfläche für den Transport von Frachtgut entsprechende Belüftungsmaßnahmen, die gleichfalls die Brandschutzbelange im Flugzeug erfüllen, umzusetzen.

US-4 445 342 zeigt eine Anordnung zur Klimatisierung von Flugdeck-Bereichen, wobei eine Luftmischereinheit, die mit Frischluft und Teilmengen der Kabinenluft versorgt wird, temperierte Mischluft Flugdeck-Bereichen zuführt. Über eine Lüftungsleitung strömt Mischluft von dem einen Flugdeck-Bereich zu dem anderen Flugdeck-Bereich, wo die Mischluft aus dem Flugdeck austritt um für die Rezirkulation wiederverwendet zu werden.

Daher liegt der Erfindung die Aufgabe zugrunde, die bekannten Ausbildungen zu verbessern, daß bei Einrüstung des Unterflurbereiches (des Frachtraumes) eines Flugzeuges mit Schlafcontainern kein Umkalibrieren des Zuluftsystems (der Luftventilation) notwendig wird, um den geforderten Volumendurchsatz der Ventilationsluft für ihm (ihr) angeschlossene Schlafcontainer bereitzustellen. Durch eine Umstellung auf reinen Frachtraum-betrieb (mit sensiblen Güterlagerung - also ohne Schlafcontainerbenutzung) sollen dabei die Forderungen der Klimatisierung des Unterflurbereiches niemals gefährdet werden.

Diese Aufgabe wird durch die im Anspruch 1 angegebenen Maßnahmen gelöst. In den weiteren Ansprüchen sind zweckmäßige Weiterbildungen und Ausgestaltungen dieser Maßnahmen angegeben.

Die Erfindung ist in einem Ausführungsbeispiel anhand der beigefügten Zeichnungen näher beschrieben. Es zeigen:
- Fig. 1: eine Anordnung zur Klimatisierung von einem Frachtraum-Schlafcontainer-Bereich
- Fig. 2: eine Anordnung nach Fig. 1 nach Umstellung auf reinen Frachtraumbetrieb.

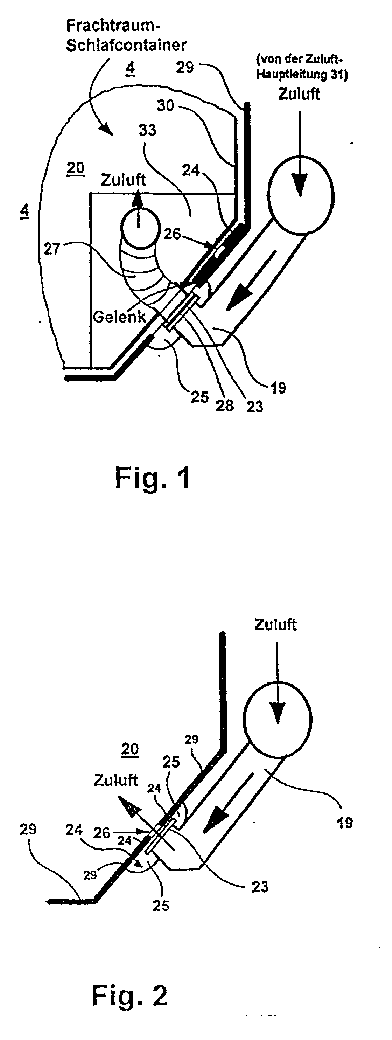

In der Fig. 1 wird der Aufbau der Anordnung zur Klimatisierung eines Frachtraum-Schlafcontainer-Bereiches 20 gezeigt. Danach wird die benötigte Zuluft (Ventilationsluft), die in einem vorgelagerten Stadium als temperierte Mischluft (aufbereitete Rezirkulationsluft) von einer (nicht gezeigten) Luftmischereinheit bereit gestellt wird, über eine (erste) Zuluft-Hauptleitung 31 transportiert und ausgangs eine Zuluft-Versorgungsleitung 19, die der Zuluft-Hauptleitung 31 angeschlossen ist, zur Verfügung gestellt. Danach wird diese Zuluft bis zu definierten Orten (Interface) über ein Rohr (bzw. Rohre) an den als Frachtraum genutzen (ersten) Unterflurbereich 4, dem nach der Fig. 1 (mindestens) ein Frachtraum-Schlafcontainer-Bereich 20 für einzurüstende Schlafcontainer reserviert wird, herangeführt. Bei dieser Konfiguration befindet sich nahe der Frachtraumwand 29 innerhalb dem erwähnten Frachtraum-Container-Bereich 20 ein Schlafcontainer, der über die Zuiuft-Versorgungsleitung 19 mit Zuluft versorgt wird. Dazu ist der Frachtraumwand 29 und auch einer Verkleidungswand 30, mit der die Frachtraumwand 29 ausgekleidet wird, je eine Wandöffnung ausgenommen, durch die ein als flexibler Luftschlauch ausgeführtes Belüftungsrohr 27 geführt wird, das in den Frachtraum-Schlafcontainer-Bereich 20 bzw. in den Frachtraum-Schlafcontainer geleitet ist. Auch ist das eine Ende des Belüftungsrohres 2, das sich der Zuluft-Versorgungsleitung 19 zuwendet, wegen der beabsichtigten Luftverbindung mit der Zuluft-Versorgungsleitung 19 mit einem Flansch 28 versehen. Das Belüftungsrohr 29 und die Zuluft-Versorgungsleitung 19 werden gemeinsam durch Befestigung ihrer Flansche 23, 28 außerhalb des Frachtraum-Schlafcontainer-Bereiches 20 und nahe der Frachtraumwand 29 miteinander verbunden. Ein (figurlich angedeutetes) Verkleidungselement 33, das innerhalb dem Fracht-Schlaf-container-Bereich 20 (dem Schlafcontainer) an der Verkleidungswand 30 befestigt ist, schützt das Belüftungsrohr 27 in der Hauptsache vor etwaigen (unerwarteten) Zerstörungen (durch Dritte). Ein als Dichtungsmanschette ausgebildetes Dichtungselement 25 dichtet die Leitungsverbindung an der Frachtraumwand 29 ab und schützt die V-Flansch-Verbindung beider Luftleitungen.

Mit einem bestimmten Wandabstand sind die beiden Wände (Frachtraumwand 29 und Verkleidungswand 30) zueinander befestigt. Innerhalb dem wandeingeschlossenen Hohlraum und nahe an der Frachtrauminnenwand gelegen ist eine (gelenk)beweglich gelagerte Klappe 24 angeordnet, die an einem Gelenk befestigt ist, das (in einer dafür geeigneten Art und Weise) an der Stirnseite des Flansch 23 (Rohrflansch) der Zuluft-Versorgungsleitung 23 montiert ist.

Diese Klappe 24 geniest - hinsichtlich der später näher betrachteten Anordnung nach der Fig. 2 - deshalb eine besondere Aufmerksamkeit, weil sie eine Luftdurchtrittsöffnung 26 von definiertem Durchmesser aufweist, die (bei begründetem Wegfall des Belüftungsrohres 27 und damit der Flanschbefestigung) im Stadium ihres gelenkveränderten abgeklappten Zustandes den Luftaustrittsquerschnitt der Zuluft am Flansch 23 (Rohrflansch) der Zuluft-Versorgungsleitung 19 maßgeblich beeinflußt.

Danach wird - nach der Fig.. 2 - die Klappe 24 als Drosselklappe eingesetzt, mit der nach geschehener Betätigung, die mit einer gelenkbewegliche Schwenkung der Klappe 24 umgesetzt wird, die Flanschöffnung des Flansches 23 abdeckt ist, wodurch der Luft-Austrittsquerschnitt der Flanschöffnung (der Zuluft-Versorgungsleitung 19 am flanschseitigen Ende) auf den Luft-Austrittsquerschnitt der Luftdurch-trittsöffnung 26 reduziert wird. Der Durchmesser der Luftdurchtrittsöffnung 26 ist kleiner dem Leitungsinnendurchmesser der Zuluft-Versorgungsleitung 19, etwa im praktikabelen Verhältnis der Durchmesser von 1:4 (in Worten: von Eins zu Vier).

Zurückkommend auf die Anordnung nach der Fig. 1 befindet sich die Klappe 24 im an oder nahe der Frachtraumwand 29 gelegenen und nicht (den Lufteintrittsquerschnitt der Zuluft beeinflußenden) abgeklappten Zustand. Da der Innendurchmesser des Belüftungsrohres gleich groß dem der Zuluft-Versorgungsleitung 19 ist, wird die Zuluft mit unverändertem Volumendurchsatz, weil keine Luftwiderstandsveränderung zwischen beiden Leitungsquerschnitten vorhanden ist, in den Innenraum des installierten Schlafcontainers eintreten.

Anders nach der Anordnung der Fig. 2, deren Aufbau sich von dem nach der Fig. 1 nur unwesentlich unterscheidet. Es wird eine reine Frachtraum-Klimatisierung gezeigt, wonach der (nach Fig. 1 installierte) Schlafcontainer dem Frachtraum-Schlafcontainer-Bereich 20 entfernt wurde. Dieser nunmehr freigewordene Unterflurbereich 4 wird für den Flugzeugtransport von (auch schon sensiblen) Frachtgut vorbereitet oder belegt. Bisher erforderten derartige Maßnahmen immer einen bestimmten Aufwand für die Umkalibrierung des Ventilationssystems, der natürlich auch umgekehrt bei einer Umrüstung von Frachtraum- auf Schlafcontainerbetrieb vonnöten wurde. Nach dieser Ausführungsform wird mit einfachen Handgriffen, die Abkupplung des Belüftungsrohres 27 (durch Auflösen der V-Flansch-Verbindung) von der Zuluft-Versorgungsleitung 19 vorausgesetzt, die normengerechte Belüftung des (rein genutzten) Frachtraumes umgesetzt. Danach wird die Klappe 24 - wie vorher bereits angegeben - durch gelenkbewegliche Schwenkung am Ende der Zuluft-Versorgungsleitung 19 vor deren Leitungsquerschnitt positioniert, so daß deren Luft-Austrittsquerschnitt (genauer: die Flanschöffnung des Flansches 23) abgedeckt ist. Dadurch wird letzterer auf den Luft-Austrittsquerschnitt der Luftdurchtrittsöffnung 26 der Klappe 24 reduziert. Dabei wird die Klappe 24 in die Frachtraumwand 29 eingesetzt, die nahezu oberflächenkonform abschließt.

Damit wird der (für den Frachtraumbetrieb geforderte) Volumendurchsatz der Ventilationsluft erreicht. Der an der Frachtraumwand 29 außerhalb dem Frachtraumbereich 4 befestigte Flansch 23 der Zuluft-Versorgungsleitung 19 hält letztere an der (Wand-)Befestigungsstelle fest und schützt außerdem mit dem Dichtungselement 25 (der Dichtungsmanschette) die Verbindungsstelle vor äußeren Einflüssen.

## Patentansprüche

1. Anordnung zur Klimatisierung von Unterflurbereichen eines Passagierflugzeuges, bestehend aus einer mit Frischluft und Teilmengen der Umluft versorgten Luftmischereinheit, die über ihr angeschlossene Zuluft-Hauptleitungen temperierte Mischluft rezirkuliert, **dadurch gekennzeichnet, daß** die Zuluft-Hauptleitungen mit Unterflurbereichen verbunden sind und daß den Unterflurbereichen eine Abluft-Hauptleitung angeschlossen ist, über die der Transfer der verbrauchten Abluft zur Flugzeug-Außenumgebung erfolgt, und daß einer ersten Zuluft-Hauptleitung (31) eine ihr separat abgezweigte Zuluft-Versorgungsleitung (19), mit der die Zufuhr von kontrolliert abgezweigter Mischluft in einen mit mobilen Frachtraum-Schlafcontainern ausgestatteten und als Frachtraum-Schlafcontainer-Bereich (20) genutzten ersten Unterflurbereich (4) geregelt wird, angeschlossen ist, ferner das Leitungsende der Zuluft-Versorgungsleitung (19) mit einem Flansch (23) versehen ist, an dem stirnseitig ein Gelenk anmontiert ist, an dem eine Klappe (24), die mit einer Luftdurchtrittsöffnung (26) von definiertem Durchmesser ausgestattet ist, befestigt ist.

2. Anordnung nach Anspruch 1, **dadurch gekennzeichnet, daß** der Durchmesser der Luftdurchtrittsöffnung (26) kleiner dem Leitungsinnendurchmesser der Zuluft-Versorgungsleitung (19) ist.

3. Anordnung nach Anspruch 1, **dadurch gekennzeichnet, daß** die Klappe (24) als Drosselklappe ausgebildet ist, mit der nach geschehener Betätigung, die mit einer gelenkbewegliche Schwenkung der Klappe (24) umgesetzt wird, die Flanschöffnung abdeckt ist, wodurch der Luft-Austrittsquerschnitt der Flanschöffnung der Zuluft-Versorgungsleitung (19) am flanschseitigen Ende auf den Luft-Austrittsquerschnitt der Luftdurchtrittsöffnung (26) reduziert wird.

4. Anordnung nach Anspruch 1, **dadurch gekennzeichnet, daß** die Klappe (24) zum Anschluß eines Frachtraum-Schlafcontainers an die Zuluft-Versorgungsleitung (19) geöffnet ist und letzterer ein Belüftungsrohr (27), dessen Rohrende mit einem weiterer Flansch (28) versehen ist, angeschlossen ist, wobei die Zuluft-Versorgungsleitung (19) und das Belüftungsrohr (27) durch Befestigung der beiden Flansche (23, 28) verbunden sind.

## Claims

1. Arrangement for air-conditioning underfloor areas of a passenger aircraft, the said arrangement consisting of an air-mixer unit which is supplied with fresh air and partial quantities of circulating air and which recirculates temperature-controlled mixing air via its connected main infeed-air lines, **characterised in that** the main infeed-air lines are connected to underfloor areas and that there is connected to the said underfloor areas a main waste-air line via which the transfer of the spent waste air to the external environment of the aircraft takes place, and that there is connected to a first main infeed-air line (31) an infeed-air supply line (19) which is branched off separately from the latter and with the aid of which the infeed of mixing air, which mixing air is branched off in a controlled manner, to a first underfloor area (4) which is equipped with mobile cargo-compartment sleeping containers and is used as a cargo-compartment sleeping-container area (20), is regulated, and furthermore the end of the infeed-air supply line (19) is provided with a flange (23), on the end face of which there is mounted a joint to which a flap (24), which is equipped with an air passage aperture (26) of defined diameter, is fastened.

2. Arrangement according to claim 1, **characterised in that** the diameter of the air passage aperture (26) is smaller than the internal diameter of the infeed-air supply line (19).

3. Arrangement according to claim 1, **characterised in that** the flap (24) is constructed as a throttle flap with the aid of which, after actuation has occurred which is realised by flexibly movable swivelling of the said flap (24), the flange aperture is covered, as a result of which the air-exit cross-section of the flange aperture of the infeed-air supply line (19) is reduced, at the flange end, to the air-exit cross-section of the air passage aperture (26).

4. Arrangement according to claim 1, **characterised in that** the flap (24) for the connection of a cargo-compartment sleeping container to the infeed-air supply line (19) is opened, and there is connected to the latter an aerating pipe (27) whose end is provided with a further flange (28), the infeed-air supply line (19) and the aerating pipe (27) being connected by the fastening of the two flanges (23, 28).

## Revendications

1. Système de climatisation pour la soute à fret d'un aéronef de passagers constitué d'une unité de mélange de l'air alimentée en air frais et en sous-ensembles de l'air recirculé, la dite unité recirculant de l'air mélangé tempéré par l'intermédiaire de ses canalisations principales d'air amené raccordées, **caractérisé en ce que** les canalisations principales d'air amené sont raccordées à la soute à fret, **en ce que** une canalisation principale d'air d'échappement assurant le transfert de l'air d'échappement consommé vers l'environnement externe de l'avion été raccordée à la soute à fret, **en ce que** une conduite de distribution (19) d'air amené dérivée d'une première canalisation principale d'air amené (31) et permettant de régler l'arrivée d'air mélangé dérivé de manière contrôlée dans une première soute à fret (4) équipée de conteneurs-lits mobiles et utilisée comme zone à conteneurs-lits (20)dérivée est raccordée à une première canalisation principale d'air amené et **en ce que** l'extrémité de la conduite de distribution de l'air amené (19) a été pourvue d'une bride (23) sur la face terminale de laquelle a été montée une articulation contre laquelle un clapet (24) doté d'une ouverture de passage de l'air (26) à diamètre défini a été fixée.

2. Système selon la revendication 1, **caractérisé en ce que** le diamètre de l'ouverture de passage de l'air (26) est inférieur au diamètre interne de la conduite de distribution d'air amené (19).

3. Système selon la revendication 1, **caractérisé en ce que** le clapet (24) se présente sous la forme d'une soupape-papillon avec laquelle l'ouverture de bride est couverte après activation par une oscillation d'articulation du clapet (24). Le recouvrement de l'ouverture de bride réduit la section transversale d'échappement d'air de l'ouverture de bride de la conduite de distribution d'air amené (19) située contre l'extrémité côté bride jusqu'au niveau de la section transversale d'échappement d'air de l'ouverture de passage de l'air (26).

4. Système selon la revendication 1, **caractérisé en ce que** le clapet (24) de raccordement d'un conteneur-lit à la conduite de distribution d'air amené (19) est ouvert et **en ce que** la dite conduite est raccordée à un tuyau d'aération (27) dont l'extrémité est pourvue d'une bride supplémentaire (28), la conduite de distribution d'air amené (19) et le tuyau d'aération (27) étant raccordés par fixation des deux brides (23, 27).
